# EUROPÄISCHE PATENTSCHRIFT

(11) **EP 2 831 413 B1**
(45) Veröffentlichungstag und Bekanntmachung des Hinweises auf die Patenterteilung: **10.04.2019**
(21) Anmeldenummer: 13709756.4
(22) Anmeldetag: 28.02.2013
(51) Int. Cl.: F03D 80/50, F03D 80/70, F16H 57/025

(54) **WINDENERGIEANLAGE MIT GETRIEBELAGERUNG UND VERFAHREN ZUM WARTEN DER GETRIEBELAGERUNG**
WIND TURBINE COMPRISING GEARBOX SUPPORTING MEANS AND METHOD FOR MAINTAINING SAID GEARBOX SUPPORTING MEANS
ÉOLIENNE COMPRENANT UN SUPPORT D'ENGRENAGE ET PROCÉDÉ DE MAINTENANCE D'UN SUPPORT D'ENGRENAGE

(30) Priorität: 29.03.2012 DE 102012205090
(43) Veröffentlichungstag der Anmeldung: 04.02.2015
(73) Patentinhaber: Senvion GmbH, 22297 Hamburg (DE)
(72) Erfinder: TREDE, Alf, 25885 Immenstedt (DE)
(74) Vertreter: Wallinger Ricker Schlotter Tostmann
(86) Internationale Anmeldenummer: PCT/EP2013/000584
(87) Internationale Veröffentlichungsnummer: WO 2013/143640

(56) Entgegenhaltungen:
- EP-A1- 1 046 832
- EP-A2- 1 197 677
- EP-A2- 1 867 871
- WO-A2-2008/028616
- DE-A1- 10 212 075
- DE-U1- 8 104 817
- DE-U1- 29 924 608
- FR-A1- 2 382 623
- US-A1- 2009 224 513
- US-B2- 7 819 624

## Beschreibung

Die Erfindung betrifft eine Windenergieanlage mit einem Rotor, einer im Wesentlichen horizontal ausgerichteten Rotorwelle, einem Getriebe, einem Maschinenträger, und einer Getriebelagerung, umfassend wenigstens ein zwischen einer Rotornabe und dem Getriebe angeordnetes Wälzlager und wenigstens zwei Auflager am Getriebe, wobei die Auflager jeweils wenigstens einen zentralen Stützkörper, wenigstens einen Rahmen und mehrere zwischen dem Rahmen und dem zentralen Stützkörper eingespannte oder einspannbare Flachelastomerkörper aufweisen. Die Erfindung betrifft ferner ein Verfahren zum Warten einer Getriebelagerung einer Windenergieanlage.

Viele moderne Windenergieanlagen mit im Wesentlichen horizontalen Rotorwellenachsen weisen in einer Gondel bzw. einem Maschinenhaus an der Turmspitze ein Getriebe auf, das den Rotor mit einem Generator verbindet. In der Gondel ist ein Maschinenträger untergebracht, auf dem der Generator sowie das Getriebe gelagert sind. Da der Maschinenträger auch den Rotor tragen muss, wird in solchen Fällen üblicherweise eine Dreipunktlagerung oder eine Vierpunktlagerung verwendet.

Die beispielhaft zu nennende Dreipunktlagerung umfasst ein Wälzlager, durch das die Rotorwelle geführt ist und das die Rotorwelle stützt. Zwei weitere Lagerpunkte sind seitlich am Getriebe angeordnet und befestigen das Getriebe am Maschinenträger. Diese seitlichen Lager nehmen auch das Getriebedrehmoment auf und werden als Auflager bzw. Getriebeauflager bezeichnet.

In den meisten existierenden Windenergieanlagen mit Getrieben ist das Wälzlager an der Rotorwelle als Festlager ausgebildet, d.h. dass dieses Wälzlager Rotorschubkräfte, die vom Wind auf den Rotor übertragen werden, aufnimmt und auf den Maschinenträger überträgt. Damit wird das Getriebe nicht mit entsprechenden Rotorschubkräften belastet und somit geschont. In diesem Fall müssen die Rotorwelle und das Wälzlager sehr stabil ausgebildet sein. Die Auflager seitlich am Getriebe sind dann als Loslager ausgebildet, so dass sie in axialer Richtung, also parallel zur Rotorwellenachse, weich ausgebildet sind.

Eine weitere Aufgabe der Lager, insbesondere der Auflager, ist die Körperschallentkopplung des Getriebes von dem Maschinenträger. Üblicherweise ist bei bekannten Getriebeauflagern jeder Bolzenkopf zur Körperschallentkopplung mit einer zylindrischen Gummilage, auch "Buchse" genannt, umhüllt, die sowohl vertikale als auch horizontale Belastungen abfedert. In axialer Richtung, also parallel zur Rotorwellenachse sind solche Lager weich. Die Geometrie des Bolzens wird durch die Gummibuchse vorgegeben. Eine Anpassung der Steifigkeit bei vorgegebener Geometrie ist durch die Auswahl der Elastomermaterialien möglich. Die Elastomerbuchsen dienen weiterhin der Körperschallentkopplung des Getriebes und sind häufig als Zylinderhalbschalen ausgeführt. Die Anbauteile dieser Elastomerkörper sind mit traditionellen Bearbeitungsverfahren, beispielsweise Bohren und Drehen, herstellbar.

Bei der Auslegung der Lager sind die Übertragung hoher Belastungen, nämlich einiger Hundert Tonnen, eine wirkungsvolle Schallentkopplung, eine einfache Austauschmöglichkeit der unter Belastung alternden Elastomerelemente, sowie eine wirtschaftliche Herstellung der Körperschallentkopplung sowie der Anschlusskonstruktion auf einen Nenner zu bringen.

Aus US 7 819 624 B2 ist ein Aufhängungssystem bekannt, bei dem anstelle eines zylindrischen Elastomerkörpers mehrere flächige Elastomerkörper an verschiedenen Seiten verwendet werden, die gegenüber einer Kompression steif sind. Diese sind um ein zentrales Lager (bearing) herum angeordnet und in einem äußeren Rahmen eingespannt.

Aus EP 1 197 677 A2 ist ebenfalls die Verwendung von elastischen Flachkörpern als Auflager eines Getriebes einer Windenergieanlage bekannt, bei der das Getriebe seitlich zwei im Querschnitt rautenförmige Lagerkörper umfasst, an denen oben und unten jeweils ein Flachkörper schräg zueinander angeordnet ist. Die vier Flachkörper links und rechts des Getriebes bilden zusammen eine Rautenform.

Einen anderen Weg geht die technische Lehre in WO 2008/028616 A2, in der ein Auflager einer Windenergieanlage zwei konusförmige Elastomerkörper mit vertikaler Symmetrieachse verwendet, mit denen auch eine Festlagerung des Getriebes verwirklicht wird.

In EP 1 867 871 A2 ist eine abschlagbare Drehmomentstütze offenbart, die eine Festlagerung mit Konuselementen und fliegender Anordnung offenbart.

Ausgehend von diesem Stand der Technik ist es Aufgabe der vorliegenden Erfindung, eine Windenergieanlage mit einer Getriebelagerung und ein Verfahren zur Wartung einer Getriebelagerung einer Windenergieanlage zur Verfügung zu stellen, wobei die Getriebelagerung im Betrieb der Windenergieanlage auftretende Lasten sicher aufnimmt, eine wirkungsvolle Schallentkopplung ermöglicht, eine einfache Austauschbarkeit von Elastomerkörpern sowie eine wirtschaftliche Herstellung ermöglicht.

Diese Aufgabe wird durch eine Windenergieanlage gemäß Anspruch 1 gelöst.

Unter einem Flachelastomerkörper werden im Rahmen der vorliegenden Erfindung flächige ebene Körper aus einem Elastomer verstanden, in Abgrenzung zu Elastomerkörpern mit gebogenen oder gekrümmten Oberflächen, wie beispielsweise konusförmige oder zylindrische Körper, also nicht flachen Körpern.

Die Getriebelagerung weist wenigstens zwei Auflager am Getriebe auf, die mit einseitiger Lagerung, auch als "fliegende Lagerung" bezeichnet, ausgeführt sind. Der Vorteil der fliegenden Lagerung des Bolzens liegt in der einfacheren Wartbarkeit und Austauschbarkeit der Flachelastomerkörper. Durch die erfindungsgemäße Kombination der Verwendung von Flachelastomerkörpern einerseits und einseitig eingespannter zentrale Stützkörper andererseits gelingt es, den Hauptnachteil der fliegenden Lagerung, nämlich die Schwachstelle des Einspannquerschnitts, zu kompensieren. Diese Schwachstelle kann bei konventionellen, zylindrischen Bolzen nicht weiter optimiert werden, da die runde Querschnittsgeometrie vorgegeben ist.

Durch die oben genannte erfindungsgemäße Kombination von Flachelastomerkörpern mit einseitiger Lagerung entsteht der synergetische Effekt, dass der Querschnitt des zentralen Stützkörpers durch die freie Wahl der Höhe des Stützkörpers und der Neigung der Flachelastomerkörper optimal an die auftretenden Belastungen, insbesondere an das Verhältnis Vertikallast zu Horizontallast angepasst werden kann. Außerdem verbessert sich die Erreichbarkeit, da die Halterung der fliegenden Lagerung an einer Seite des Auflagers angebracht sein kann, die von Bedienpersonal gut zu erreichen ist, während auf der gegenüberliegenden Seite häufig der Platz sehr beschränkt ist, um an das Lager heranzukommen.

Es sind wenigstens zwei der Auflager als Festlager zur Aufnahme von wenigstens 50 % der im Betrieb der Windenergieanlage auftretenden in axialer Richtung der Rotorwelle wirkenden Rotorschubkräfte ausgebildet. Insbesondere ist es vorgesehen, dass die als Festlager ausgebildeten Auflager mehr als 80 %, insbesondere mehr als 95 %, der Rotorschubkräfte aufnehmen. Damit ist das entsprechende Auflager als Festlager ausgeführt. Dadurch ist es möglich, das Wälzlager an der Rotorwelle als Loslager auszuführen, jedoch kann das Wälzlager auch teilweise als Festlager ausgeführt sein und einen Teil der Rotorschubkräfte ebenfallsaufnehmen. Je weniger Rotorschubbelastung das Wälzlager aufnehmen muss, desto kleiner und kompakter kann das Lager ausgeführt werden. Bei einem kleineren Lager kann auch der Durchmesser der Rotorwelle kleiner ausgeführt sein.

In einer nicht beanspruchten Ausführung sind vorteilhafterweise wenigstens zwei der Auflager als Loslager ausgebildet, wobei die Flachelastomerkörper mit ihren Flächennormalenvektoren im Wesentlichen senkrecht zur Rotorachse ausgerichtet sind, so dass Rotorschubkräfte im Wesentlichen eine Schubbeanspruchung in den Flachelastomerkörpern bewirken. Die Schub- bzw. Scherverformungen im Elastomer sind so groß und die Rückstellkräfte dabei so klein, dass das Auflager in diesem Fall als Loslager wirkt und die Rotorschubbelastungen insbesondere von dem Wälzlager an der Rotorwelle aufgenommen werden.

Der zentrale Stützkörper und der Rahmen erfordern gegenüber Lagern des Standes der Technik mit zylindrischen bzw. hohlzylindrischen Elastomeren eine veränderte Geometrie, da nunmehr ebene Flächen zur Aufnahme der Flachelastomerkörper hergestellt werden müssen, die zueinander komplementär sind. Diese schiefen Ebenen sollten mit hoher Präzision zueinander gefertigt sein. Anders als die Flachelastomerkörper bleiben der Rahmen und der zentrale Stützkörper jedoch während der Lebensdauer der Windenergieanlage erhalten, so dass diese nur einmal gefertigt werden müssen, während die Flachelastomerkörper im Verlauf der Lebensdauer einer Windenergieanlage ausgetauscht werden müssen. Der erhöhte Aufwand zur Herstellung der ebenen Polygonalstruktur des Stützkörpers und des Rahmens wird daher durch die Vereinfachung der Herstellung der Flachelastomerkörper gegenüber gekrümmten Elastomerkörpern aufgewogen.

Vorteilhafterweise ist der zentrale Stützkörper mit dem Getriebe verbunden und der Rahmen mit dem Maschinenträger, oder ist der zentrale Stützkörper mit dem Maschinenträger verbunden und der Rahmen mit dem Getriebe. Besonders bevorzugt ist die erstgenannte Ausführungsform, bei der der Stützkörper mit dem Getriebe verbunden ist und der Rahmen mit dem Maschinenträger.

Erfindungsgemäß sind in einem als Festlager ausgebildeten Auflager jeweils wenigstens zwei Flachelastomerkörper an unterschiedlichen Seiten des zentralen Stützkörpers in unterschiedlichen Richtungen schräg zur Rotorwellenachse so ausgerichtet und zueinander angeordnet, dass der Stützkörper in Richtung einer zur Rotorwellenachse parallelen Rotorschubbelastung zwischen den Flachelastomerkörpern eingekeilt ist. Bei Flachelastomerkörpern, die bislang lediglich als Loslager eingesetzt werden, führt die Aufnahme des Rotorschubs zu Schub- oder auch Scherbelastungen im Gummi. Auf Schub reagiert Gummi mit großen Verformungen, sodass die Flachelastomere stark einfedern. Solcherart werden Flachelastomere in Loslagern eingesetzt. Bei der erfindungsgemäßen Einkeilung des zentralen Stützkörpers werden nunmehr die Rotorschubbelastungen teilweise in Druckbelastungen im Gummi überführt. Auf Druck reagiert Gummi mit einem harten Federverhalten, sodass die Einkeilung die Verwendung der Flachelastomerkörper als Festlager stark begünstigt.

Als Rotorschub ist im Rahmen dieser Erfindung die aus dem Winddruck auf den Rotor resultierende Axialkraft in Richtung der Rotordrehachse bezeichnet. Je nach Betriebszustand, insbesondere auch bei Bremsmanövern, kann es auch zu einer Umkehrung der Schubrichtung (negativer Rotorschub) kommen. In diesem Falle zieht der Rotor den Turm nach vorn. Aus diesem Grunde ist es von Vorteil, wenn das als Festlager ausgebildete Auflager die Kraftaufnahme in beiden Richtungen übernehmen kann. Daher ist die Einkeilung bevorzugt so ausgeführt, dass Rotorschubkräfte in beiden Richtungen sicher aufgenommen werden, sodass ein Festlager in beiden Kraftrichtungen realisiert ist.

Der zentrale Stützkörper ist vorzugsweise ein Bolzen. Der Bolzen oder zentrale Stützkörper weist vorzugsweise einen im Wesentlichen polygonalen Querschnitt auf, um Kontaktflächen für die Flachelastomerkörper bereitzustellen.

Der zentrale Stützkörper weist erfindungsgemäß zur Einstellung der Verkeilung einen in Richtung der Rotorwelle variablen Querschnitt auf, insbesondere eine variable Höhe. Der variable Querschnitt ergibt sich aus den schräg gestellten Auflageflächen des Stützkörpers für die Flachelastomerkörper. Da die Drehmomentbelastungen des Getriebes von dem Auflager aufgefangen werden müssen, sind die Flachelastomerkörper vorzugsweise oberhalb und unterhalb des zentralen Stützkörpers angeordnet, da seitliche, also horizontale Belastungen senkrecht zur Rotorwellenachse weniger groß sind als diejenigen, die in vertikaler Richtung führen, sofern das Auflager seitlich am Getriebe angeordnet ist. Die variable Höhe stellt daher die bevorzugte Variante dar, da das Lager als Auflager dient. Bei einem beispielsweise unterhalb des Getriebes angeordneten Auflager ist die Geometrie gegebenenfalls anders zu wählen, so dass hier beispielsweise ein im Wesentlichen symmetrischer Querschnitt oder breiter Querschnitt mit seitlich angeordneten Flachelastomerkörpern vorzugsweise gewählt wird.

Die Geometrie des zentralen Stützkörpers wird im Auslegungsprozess insbesondere durch Anpassen der Höhe so gewählt, dass die Materialausnutzung für horizontale und vertikale Lasten gleich ist.

Ein oder mehrere Flachelastomerkörper sind vorteilhafterweise als polygonale Flachelastomerkörper mit mehr als drei, insbesondere abgerundeten, Ecken, als elliptische Flachelastomerkörper oder als kreisförmige Flachelastomerkörper ausgebildet. Besonders bevorzugt sind in diesem Fall kreisförmige Flachelastomerkörper, da diese besonders wenig Verschleiß unterliegen, da die runde Form eine in jedem Fall gleichmäßige Kraftverteilung nach sich zieht. Bei polygonalen, beispielsweise quadratischen oder rechteckigen, Flachelastomerkörpern ist es vorteilhaft, die Ecken abzurunden, um Kraftspitzen an den Ecken, die zu einer besonders schnellen Materialermüdung führen, zu vermeiden.

Vorzugsweise ist die Höhe des zentralen Stützkörpers größer als die Breite des Stützkörpers. Dies ist insbesondere bei einem seitlich angebrachten Auflager der Fall, bei dem die größte Belastung in der Vertikalen entsteht, hervorgerufen einerseits durch das über den Hebel des Wälzlagers und die Rotorwelle eingebrachte Nickmoment des Rotors und andererseits durch die in vertikaler Richtung wirkenden Kräfte aus dem Drehmoment während des Betriebs der Windenergieanlage.

Vorzugsweise sind die Flachelastomerkörper, insbesondere in Abhängigkeit der im Betrieb der Windenergieanlage auf sie einwirkenden Lasten, insbesondere Rotorschub, Drehmoment, Giermoment und/oder Nickmoment, unter Winkeln von mehr als 45° oder von weniger als 45° zu einer Horizontalen oder einer Vertikalen angeordnet. Diese Abweichung von dem Neigungswinkel von 45° ist abhängig von den auftretenden Kräften zu bestimmen. Bei seitlich angeordneten Auflagern sind flachere Anordnungen vorteilhaft, bei denen die Flachelastomerkörper beispielsweise unter Winkeln bezüglich einer horizontalen Ebene von zwischen 15° und 40°, bevorzugt 25° bis 35°, angeordnet sind.

Der zentrale Stützkörper ist erfindungsgemäß parallel oder senkrecht zur Rotorwellenachse angeordnet, bei einer senkrechten Anordnung zur Rotorwellenachse im Wesentlichen horizontal. Damit werden zwei Möglichkeiten der Ausrichtung des zentralen Stützkörpers angegeben. Eine davon ist die von den Loslagern mit hohlzylindrischen Elastomerkörpern bekannte Ausrichtung parallel zur Rotorwellenachse. Dies ist insbesondere in der Breite platzsparend, da das eigentliche Lager mit den Elastomerkörpern sehr dicht am Getriebe angeordnet sein kann. Die Alternative ist die Ausrichtung des zentralen Stützkörpers senkrecht zur Rotorwellenachse, insbesondere in einer horizontalen Richtung. Diese Ausführungsform benötigt wenig Raum in einer Richtung parallel zur Rotorwellenachse.

Die Getriebelagerung wird vorzugsweise dadurch weitergebildet, dass der Rahmen ein oberes Rahmenteil und ein unteres Rahmenteil aufweist, die mittels Stehbolzen miteinander verbindbar oder verbunden sind, wobei die Stehbolzen durch durchgehende Öffnungen im oberen Rahmenteil steckbar oder gesteckt sind und mit dem unteren Rahmenteil oder dem Maschinenträger oder dem Getriebe verbindbar sind, wobei die Stehbolzen oberhalb des oberen Rahmenteils mit Schraubmuttern versehen sind, wobei das untere Rahmenteilfest mit dem Maschinenträger verbindbar oder verbunden ist. Insbesondere können die Stehbolzen zusätzlich durch durchgehende Öffnungen im unteren Rahmenteil steckbar oder gesteckt sein und zwischen dem oberen Rahmenteil und dem unteren Rahmenteil mit Schraubmuttern versehen sein. In diesem Fall können die Stehbolzen der Verschraubung des gesamten Rahmens mit dem Maschinenträger dienen. Das untere Rahmenteil kann auch beispielsweise mit dem Maschinenträger verschweißt sein. Eine solche Ausbildung mit zwei Rahmenteilen, den dazwischen angeordneten zentralen Stützkörper und den dazwischen angeordneten Flachelastomerkörpern ist besonders gut zur Montage, Demontage und Wartung geeignet. Die oberen und unteren Rahmenteile können auch als "Oberbock" und "Unterbock" bezeichnet werden.

Insbesondere für den letzten Fall ist vorzugsweise ein Demontagehaltekörper umfasst, der einerseits mit einem mit dem Getriebe verbundenen Teil eines Auflagers und andererseits mit einem dem Maschinenträger verbundenen Teil des Auflagers oder dem Maschinenträger selbst verbindbar ist. Insbesondere kann der Demontagekörper mit dem Stützkörper einerseits und dem unteren Rahmenteil oder dem Maschinenträger andererseits verbunden sein, wenn der Stützkörper mit dem Getriebe verbunden ist. Dieser Demontagehaltekörper kann den zentralen Stützkörper und somit das Auflager ortsfest halten, wenn der Rahmen aufgeschraubt wird, um die Flachelastomerkörper auszutauschen oder zu inspizieren. Wenn der zentrale Stützkörper oder der Rahmen nicht festgehalten würde, könnte das Getriebe unter dem Gewicht des Rotors über das Wälzlager nach oben gerissen werden und die Windenergieanlage beschädigen.

Schließlich wird die der Erfindung zugrunde liegende Aufgabe auch durch ein Verfahren gemäß Anspruch 8 gelöst.

Vorzugsweise wird bei dem erfindungsgemäßen Verfahren vorgesehen, dass zum Warten von zwischen dem zentralen Stützkörper und dem unteren Rahmenteil angeordneten Flachelastomerkörpern
- zunächst die Schraubmuttern auf den Stehbolzen oberhalb des oberen Rahmenteils gelockert werden und
- anschließend das Getriebe mit dem zentralen Stehkörper durch das Rotorgewicht oder durch ein Hilfsmittel angehoben wird.

Mittels dieses Verfahrens ist es möglich, die an allen Seiten des zentralen Stützkörpers angeordneten Flachelastomerkörper zu entnehmen, zu inspizieren und gegebenenfalls auszutauschen, ohne dass das Getriebe noch anderweitig gesichert werden müsste. Als Hilfsmittel, wenn das Rotorgewicht nicht ausreicht, kommen beispielsweise elektrische oder hydraulische Hebevorrichtungen zum Einsatz.

Wenn sowohl die oberen als auch die unteren Flachelastomerkörper gewartet werden sollen, ist vorzugsweise vorgesehen, dass
- wenn die Schritte a) und b) hintereinander ausgeführt werden, nach Ausführung der Teilschritte des Schrittes a) und vor Ausführung der Teilschritte des Schrittes b) der Rahmen wieder verspannt wird und der Demontagehaltekörper entfernt wird,
oder,
- wenn die Schritte b) und a) hintereinander ausgeführt werden, nach Ausführung der Teilschritte des Schrittes b) und vor Ausführung der Teilschritte des Schrittes a) der Rahmen wieder verspannt wird.

Auf diese Weise ist ein sicherer und effizienter Wartungsvorgang möglich.

Die zu den einzelnen Erfindungsgegenständen, also der Windenergieanlage und dem Verfahren, genannten Vorteile, Merkmale und Eigenschaften gelten auch für die jeweils anderen Erfindungsgegenstände, die sich aufeinander beziehen.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: einen schematischen Querschnitt durch die Gondel einer bekannten Windenergieanlage,
- Fig. 2: eine schematische Darstellung eines Auflagers mit Flachelastomerkörpern,
- Fig. 3: eine schematische Darstellung eines weiteren Loslagers mit Flachelastomerkörpern,
- Fig. 4: eine schematische Darstellung eines weiteren Ausführungsbeispiels eines Loslagers mit Flachelastomerkörpern,
- Fig. 5: eine schematische Darstellung eines erfindungsgemäßen Auflagers,
- Fig. 6: eine schematische Darstellung eines erfindungsgemäßen Auflagers,
- Fig. 7: eine schematische Darstellung eines weiteren erfindungsgemäßen Auflagers,
- Fig. 8: eine weitere schematische Darstellung des Auflagers gemäß Fig. 7,
- Fig. 9: eine schematische Querschnittsdarstellung durch ein als fliegendes Lager ausgebildetes erfindungsgemäßes Auflager,
- Fig. 10: eine schematische Darstellung eines weiteren erfindungsgemäßen Auflagers,
- Fig. 11: eine weitere schematische Darstellung des Auflagers gemäß Fig. 9,
- Fig. 12: eine schematische Darstellung eines weiteren Auflagers,
- Fig. 13: eine schematische Darstellung eines weiteren erfindungsgemäßen Auflagers,
- Fig. 14: eine schematische Darstellung eines nicht erfindungsgemäßen Auflagers und
- Fig. 15: eine weitere schematische Darstellung eines Auflagers gemäß Fig. 14.

In den Zeichnungen sind jeweils gleiche oder gleichartige Elemente und/oder Teile mit denselben Bezugsziffern versehen, so dass von einer erneuten Vorstellung jeweils abgesehen wird.

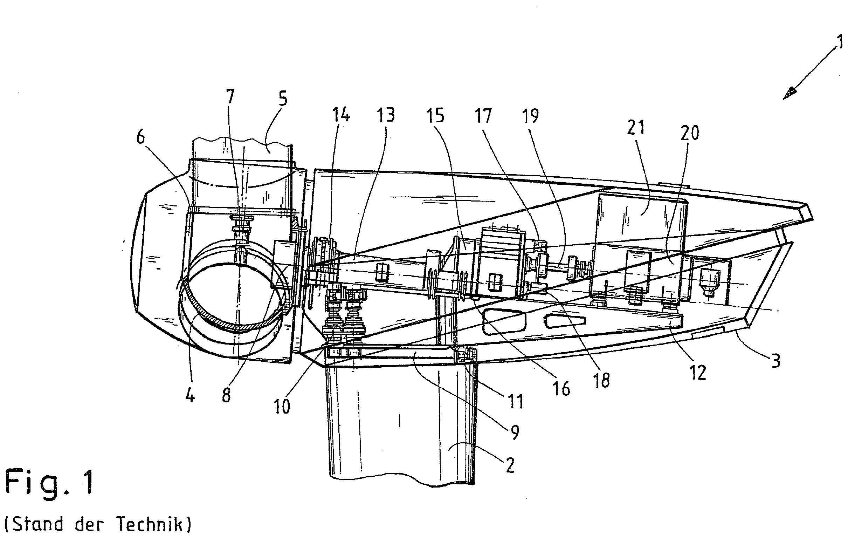

In Fig. 1 ist eine Querschnittsdarstellung durch eine Gondel einer bekannten Windenergieanlage, beispielsweise der Windenergieanlage MD70 der Anmelderin, gezeigt. Die Gondel 3 sitzt auf einem Turm 2, dessen gondelnaher Abschnitt dargestellt ist. Links in Fig. 1 ist ein Rotor dargestellt mit einer Rotornabe 4, Rotorblättern 5, die nur im Bereich der Rotorblattwurzel dargestellt sind. Die Rotorblätter 5 weisen im Bereich der Rotorblattwurzel jeweils ein Rotorblattlager 6 auf, an das ein Blattverstellantrieb 7 angreift. Der Blattverstellantrieb 7 wird durch eine Steuerung 8 angesteuert und verändert im Betrieb der Windenergieanlage 1 den Blatteinstellwinkel des jeweiligen Rotorblatts 5.

Die Gondel 3 beherbergt einen Maschinenträger 12, der über einen Turmkopfdrehkranz 9 mit dem Turm 2 verbunden ist. Am Turmkopfdrehkranz 9 greifen Windnachführungsmotoren 10 einer Azimutverstellung an, die die Gondel bzw. den Rotor in Richtung auf die herrschende Windrichtung ausrichten. Hierzu sind vier Windnachführungsmotoren 10 vorhanden, von denen zwei auf der dargestellten Seite angeordnet sind und zwei verdeckt dahinter auf der anderen Seite des Maschinenträgers 12. Ebenfalls greifen am Turmkopfdrehkranz 9 Azimutbremsen 11 an, die der Arretierung der Azimuteinstellung des Rotors dienen.

Der Rotor treibt eine Rotorwelle 13 an, die in einem als Wälzlager ausgebildeten Rotorlager 14 drehbar gelagert ist. Bei der Windenergieanlage MD70 der Anmelderin ist das Rotorlager 14 als Festlager ausgebildet, das nur wenige Millimeter Spiel in axialer Richtung der Rotorwelle 13 erlaubt. Die Rotorwelle 13 treibt ein Getriebe 15, das die langsame Drehbewegung der Rotorwelle in eine schnelle Drehbewegung einer Generatorwelle 19, die mit Kupplungen dargestellt ist, umsetzt, die wiederum einen Generator 20 zur Stromerzeugung antreibt, der mit einem Wärmetauscher 21 ausgestattet ist.

Das Getriebe 15 weist außerdem eine Rotorbremse 17 und einen Schleifringüberträger 18 auf sowie zwei elastische Getriebeaufhängungen bzw. Auflager 16, von denen eines in Fig. 1 dargestellt ist, während sich das andere symmetrisch auf der anderen Seite des Getriebes 15 befindet und somit durch das Getriebe 15 verdeckt ist.

Das Auflager 16 bzw. die elastische Getriebeaufhängung ist konventionell gestaltet und besteht aus hohlzylindrischen Elastomerkörpern aus zwei halbzylindrischen Teilkörpern, die um einen zylindrischen Bolzen herum angeordnet sind. Mit seinen zylindrischen Lagern, deren Zylinderachse parallel zur Rotorwelle 13 ausgerichtet ist, handelt es sich bei dem Auflager 16 um ein Loslager, da es aufgrund seiner Weichheit in dieser Richtung nur wenig Rotorschubkraft in Richtung der Rotorwellenachse aufnimmt.

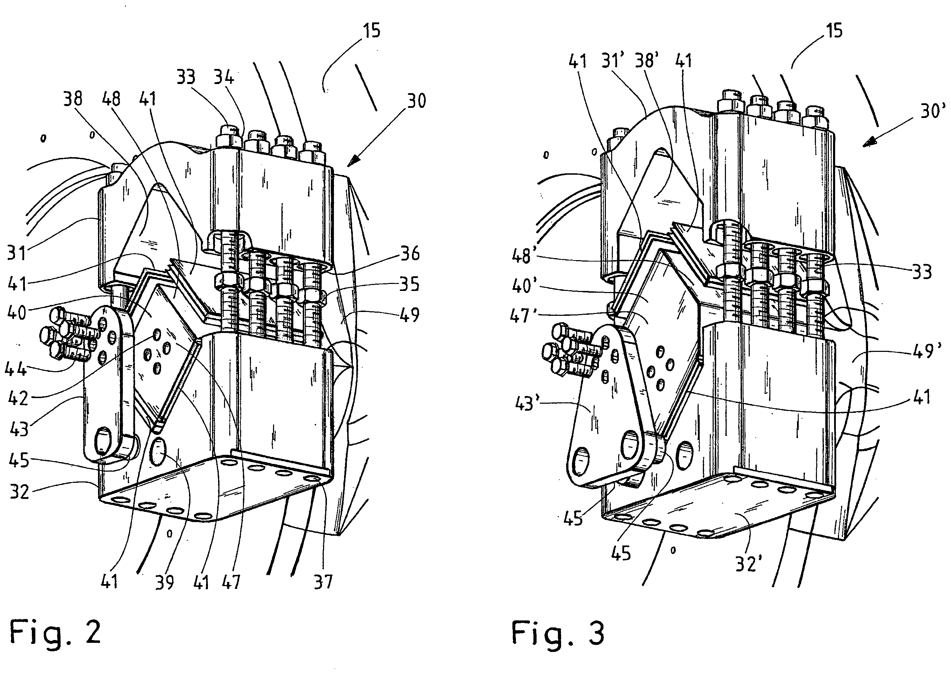

In Fig. 2 ist ein Ausführungsbeispiel eines als Loslager ausgebildeten Auflagers mit Flachelastomerkörpern dargestellt. Im Hintergrund in Fig. 2 ist das im Wesentlichen zylindrische Gehäuseteil des Getriebes 15 ausschnittsweise dargestellt. Dieses ist über einen Lagerarm 49 mit einem zentralen Stützkörper 40 des dargestellten Auflagers verbunden, dessen Längsachse parallel zur Rotorwelle ausgerichtet ist. Im Querschnitt ist der Stützkörper 40 quadratisch und weist vier Auflageflächen 48 in 45°-Anordnung auf, auf denen rechteckige Flachelastomerkörper 41 aufliegen. Um den Stützkörper 40 und die Flachelastomerkörper 41 herum ist ein Rahmen 30 mit einem oberen Rahmenteil 31 und einem unteren Rahmenteil 32 bzw. Oberbock und Unterbock angeordnet, zwischen denen der Stützkörper 40 und die Flachelastomerkörper 41 eingespannt werden. Das obere Rahmenteil 31 und das untere Rahmenteil 32 weisen entsprechende komplementäre Auflageflächen 38 für die Flachelastomerkörper 41 auf.

Zum Einspannen des zentralen Stützkörpers 40 und der Flachelastomerkörper 41 weisen die Rahmenteile 31, 32, durchgehende Öffnungen 36, 37 auf, durch die Stehbolzen 33 gesteckt sind, die am unteren Ende mit dem Maschinenträger (nicht dargestellt) verbunden werden. Zur Verspannung des unteren Rahmenteils 32 mit dem Maschinenträger dienen Schraubmuttern 35, die in montiertem Zustand von einer Ausnehmung im oberen und/oder unteren Rahmenteil aufgenommen werden. Weitere obere Schraubmuttern 34 dienen zum Verspannen des oberen Rahmenteils 31 gegenüber dem unteren Rahmenteil 32. Durch die oberen Schraubmuttern 34 wird somit der Stützkörper 40 mit den Flachelastomerkörpern 41 eingespannt.

An seiner Frontfläche 47 weist der zentrale Stützkörper 40 vier Verbindungsöffnungen 42 auf. Ferner weist das untere Rahmenteil 32 an seiner Frontfläche zentral bzw. mittig eine Verbindungsöffnung 39 auf. Diese Verbindungsöffnungen 39 und 42 dienen zur Halterung eines Demontagehaltekörpers 43, der an seinem oberen Ende mit vier Schrauben 44 an dem Stützkörper 40 befestigt wird und an seinem unteren Ende mit einem Verbindungskörper 45 in die Verbindungsöffnung 39 eintritt und somit verhindert, dass der Stützkörper 40 sich gegenüber dem unteren Rahmenteil 32 bewegen kann. So ist es möglich, das obere Rahmenteil 32 nach Lösen der oberen Schrauben 34 anzuheben und an die oberen Flachelastomerkörper 41 zu gelangen.

Ist andererseits vorgesehen, dass die unteren Flachelastomerkörper 41 unterhalb des Stützkörpers 40 gewartet werden sollen, so ist es nicht nötig, den Demontagehaltekörper 43 anzuwenden, sondern es werden lediglich die oberen Schraubmuttern 34 gelöst bzw. nach oben verschraubt. Unter dem Gewicht des Rotors wird das Getriebe angehoben und nimmt dabei den Stützkörper 40 sowie das obere Rahmenteil 31 bzw. den Oberbock nach oben mit. Reicht das Eigengewicht des Rotors nicht aus, wird das Getriebe gegebenenfalls mit einem Hilfsmittel, beispielsweise hydraulisch, angehoben.

In Fig. 3 ist ein weiteres Ausführungsbeispiel eines als Loslager ausgebildeten Auflagers mit Flachelastomerkörpern 41 dargestellt, das sich von dem in Fig. 2 dargestellten Beispiel durch die Geometrie des zentralen Stützkörpers 40' unterscheidet. Die Neigungswinkel der Auflageflächen 48' sind die gleichen wie die Neigungswinkel der Auflageflächen 48 in Fig. 2. Der Querschnitt des Stützkörpers 40' ist allerdings höher, so dass dieser Stützkörper 40' auch zwei seitliche Flächen aufweist. Durch die größere Höhe des Stützkörpers 40' kann dieser höhere Vertikallasten, beispielsweise aus dem Rotordrehmoment resultierend, aufnehmen. Es ist vorgesehen, dass die Querschnittshöhe bei der Dimensionierung so ausgewählt wird, dass sie optimal auf das Verhältnis von Vertikalkraft zu Horizontalkraft angepasst ist. Auch die Form des Lagerarms 49' ist an die Form des Stützkörpers 40' angepasst, ebenso für die Form der Frontfläche 47' des Stützkörpers 40'. Außerdem ist der Demontagehaltekörper 43' nunmehr dreieckig mit zwei Verbindungskörpern 45 ausgebildet. Auch die Anzahl der Verbindungsöffnungen 39 und Verbindungskörper 45 wird entsprechend der auftretenden Belastungen ausgewählt.

Das obere Rahmenteil 31' und das untere Rahmenteil 32' des Rahmens 30' sind jeweils seitlich ebenfalls verlängert, um der höheren Abmessung des Stützkörpers 40' Rechnung zu tragen. Dieser zentrale Stützkörper 40' ist gegenüber dem zentralen Stützkörper 40 aus Fig. 2 aufgrund seines erhöhten Querschnittes insbesondere in vertikaler Richtung höher belastbar.

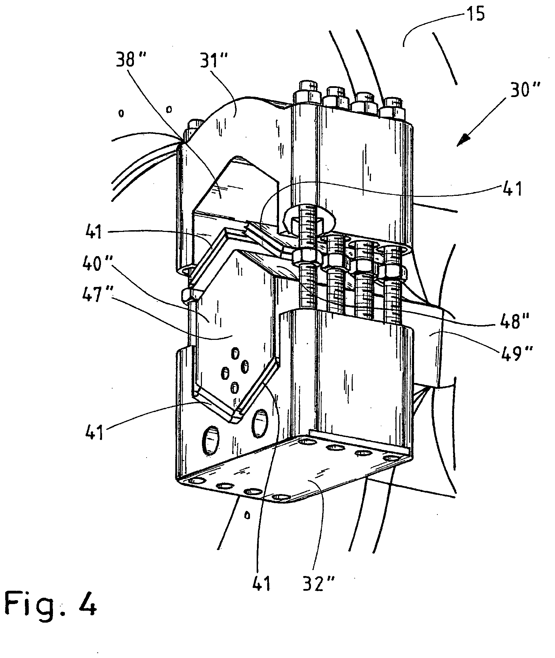

In Fig. 4 ist ein weiteres Ausführungsbeispiel eines als Loslager ausgebildeten Auflagers schematisch dargestellt, bei dem die entsprechenden Elemente mit Bezugszeichen 32", 40" usw. bezeichnet sind, um Unterschiede zu den Ausführungsbeispielen gemäß Fig. 2 und Fig. 3 deutlich zu machen. In dem in Fig. 4 gezeigten Auflager ist der Querschnitt des zentralen Stützkörpers 40" sechseckig, wobei die Neigung der Auflageflächen 38" sowie der Flachelastomerkörper 41 zur horizontalen Ebene 30° beträgt. Wie an der Frontfläche zu sehen ist, benötigt auch diese Form einen dreieckigen Demontagehaltekörper 43. Diese Form des Rahmens 30" und des Stützkörpers 40" ist ebenfalls für hohe Belastungen in vertikaler Richtung ausgebildet, wobei insbesondere die flacher angeordneten Flachelastomerkörper 41 zur Aufnahme höherer Vertikallast und geringerer Horizontallast geeignet sind.

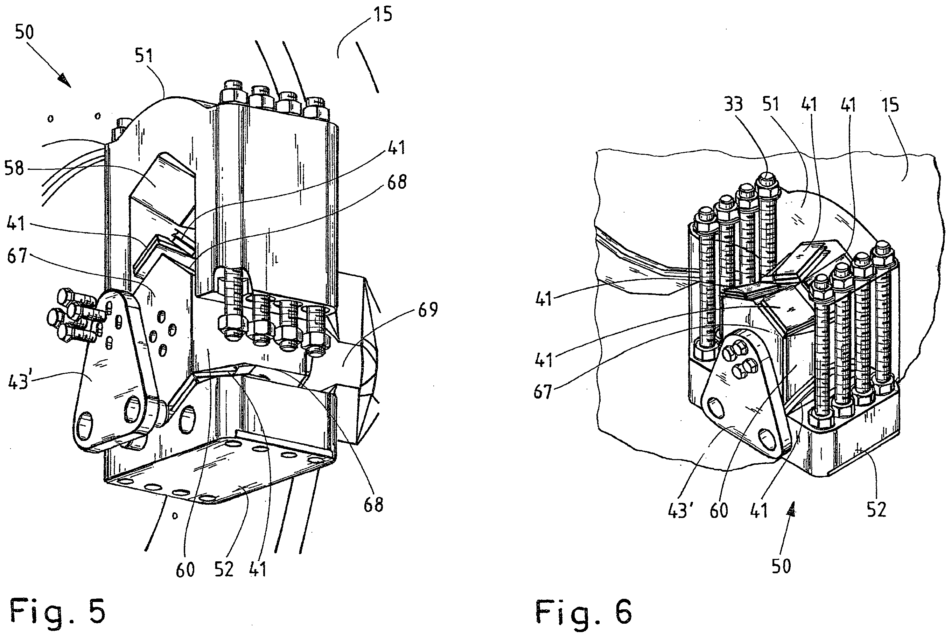

In Fig. 5 ist ein Ausführungsbeispiel eines erfindungsgemäßen Auflagers schematisch perspektivisch dargestellt. Gegenüber den Figuren 2 bis 4 sind die Bezugsziffern für gleichartige Details um 20 erhöht. Im Vergleich zu den als Loslagern ausgebildete Auflagern der Figuren 2 bis 4 ist das in Fig. 5 dargestellte Auflager so ausgebildet, dass der zentrale Stützkörper 60 einen in seiner Länge variablen Querschnitt aufweist. Auf die Frontfläche 67 des Stützkörpers 60 blickend, weisen die Flachelastomerkörper 41 zur Horizontalen jeweils eine Neigung von ca. 30° auf. Ebenso weist der zentrale Stützkörper 60 zwei senkrechte Seitenflächen auf. Es ist jedoch in Fig. 5 zu sehen, dass in Richtung auf das Zentrum des Stützkörpers 60 zu, parallel zur Rotorwellenachse, der vertikale Querschnitt des Stützkörpers 60 abnimmt. Das bedeutet, dass die Auflageflächen 68 des Stützkörpers 60 sowie die Flachelastomerkörper 41 auch in dieser Richtung schräg angeordnet sind, und zwar mit einer Neigung von ca. 20°. Die oberen und unteren Flachelastomerkörper 41 sind daher im Wesentlichen in einer doppelten Keilform zueinander angeordnet.

Fortschreitend nach Überwindung des Zentrums des Stützkörpers 60 sind die weiteren Flachelastomerkörper spiegelsymmetrisch zu den sichtbaren Flachelastomerkörpern angeordnet, so dass sich eine weitere, umgekehrte Keilform ergibt. Diese doppelte Keilform nimmt Rotorschubbelastungen in beiden Richtungen auf die Rotorwelle sowie das Getriebe auf. Die Auflageflächen 58 im oberen Rahmenteil 51 und im unteren Rahmenteil 52 sind entsprechend komplementär ausgebildet. Der Lagerarm 69, der den zentralen Stützkörper 60 mit dem Getriebe 50 verbindet, ist in seinem Querschnitt entsprechend ausgebildet. Es handelt sich um ein Beispiel einer fliegenden Lagerung.

In Fig. 6 ist das Auflager aus Fig. 5 in einer anderen perspektivischen Darstellung schematisch dargestellt. Dabei ist das obere Rahmenteil 51 durchsichtig dargestellt, so dass die Geometrie der vier obere Flachelastomerkörper deutlich sichtbar ist. Diese sind im Wesentlichen sattelförmig zueinander angeordnet. Umgekehrt gilt das auch für die nicht vollständig sichtbaren unteren Flachelastomerkörper 41. Die perspektivisch an der Frontfläche 67 dargestellten Flachelastomerkörper 41 nehmen diejenigen axialen Kräfte auf, die vom Betrachter weg gerichtet sind, währen die dahinter gelegenen Flachelastomerkörper 41 die auf den Betrachter zu wirkenden axialen Kräfte aufnehmen.

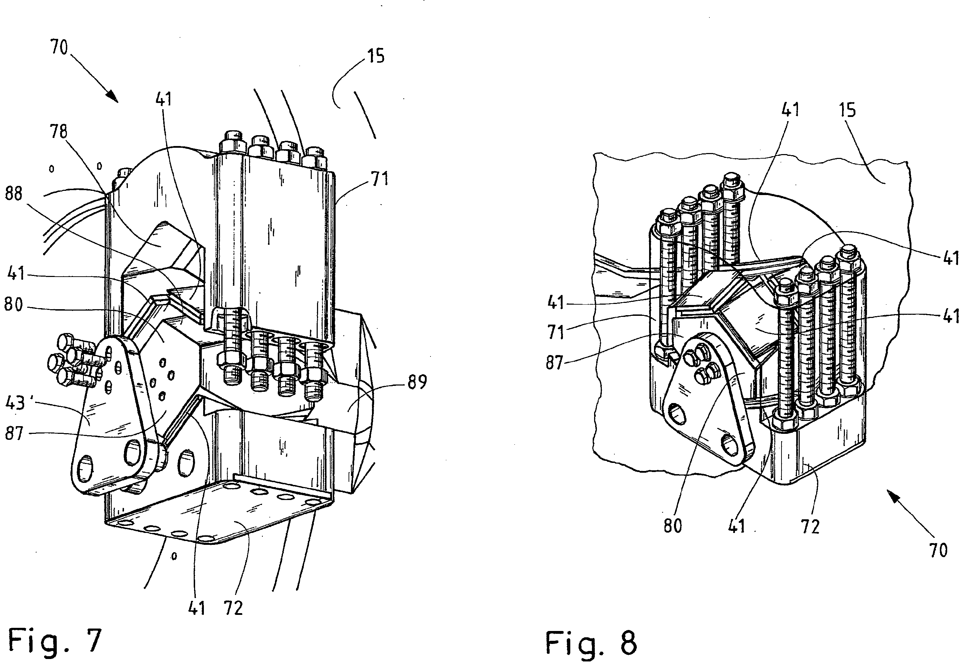

In den Figuren 7 und 8 ist ein weiteres Beispiel eines erfindungsgemäßen Auflagers einer erfindungsgemäßen Getriebelagerung dargestellt, bei denen die Bezugsziffern gegenüber dem Beispiel aus den Figuren 5 und 6 wieder um 20 erhöht sind. In diesem Fall sind die Flachelastomerkörper 41 nicht sattelförmig angeordnet, sondern so, dass ihre Normalenvektoren aufeinander zuweisen. In beiden Fällen, also in Fig. 7 und Fig. 8, schaut der Betrachter auf die Frontfläche 87 mit den entsprechenden Öffnungen für einen Demontagehaltekörper 43', wobei die auf den Betrachter zu ausgerichteten Flachelastomerkörper 41 axiale Kräfte in Richtung auf den Betrachter aufnehmen durch Einkeilung des zentralen Stützkörpers 80 und die vom Betrachter abgewandten Flachelastomerkörper 41 die entgegengesetzten Rotorschubkräfte aufnehmen. Die Normalenvektoren auf die Flachelastomerkörper 41 bzw. die Auflageflächen 88 bzw. 78 weisen in diesem Fall im Wesentlichen eine "X"-Form auf. Dies ist im Unterschied zu dem Ausführungsbeispiel der Figuren 5 und 6, in der diese Flächennormalenvektoren voneinander wegweisen und im Wesentlichen eine "O"-förmige Konfiguration aufweisen.

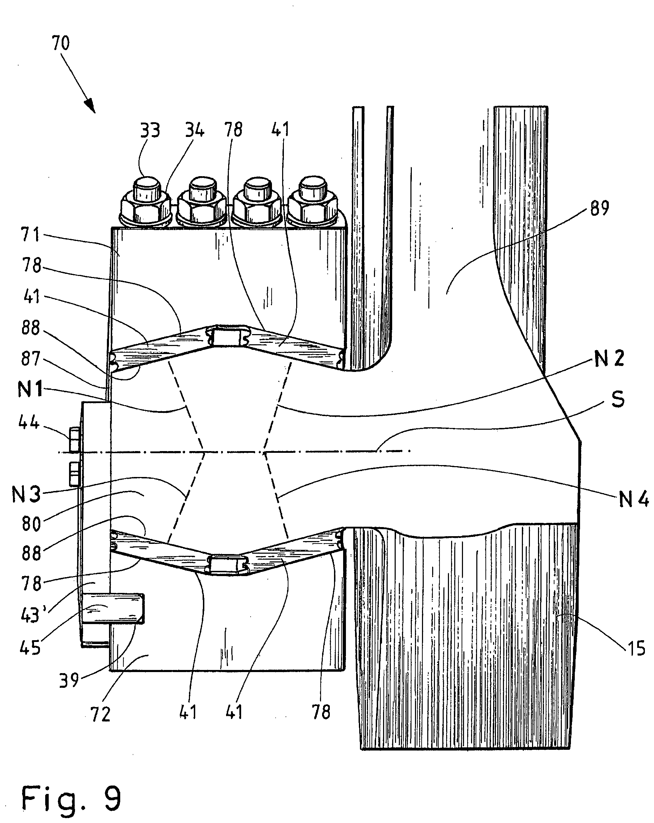

In Fig. 9 ist ein Querschnitt durch ein erfindungsgemäßes Auflager gemäß Fig. 7 und Fig. 8 gezeigt. Ein Lagerarm 89, der mit einem Gehäuse des Getriebes 15 verbunden ist, mündet in einen zentralen Stützkörper 80 mit mehreren Auflageflächen 88, an denen jeweils ein Flachelastomerkörper 41 anliegt. Dieser Stützkörper 80 ist nur einseitig gelagert, so dass es sich um eine fliegende Lagerung handelt. Die ist besonders platzsparend und einfach wartbar.

Die Normalenvektoren N1 bis N4 auf die Flachelastomerkörper 41 weisen aufeinander zu und ergeben zusammen eine Art "X"-Konfiguration, insbesondere bezüglich einer Symmetrieachse S durch den zentralen Stützkörper 80. Es ist deutlich erkennbar, dass es sich bei den Flachelastomerkörpern 41 um Kompositflächenkörper handelt, die in bekannter Weise hergestellt sein können durch eine Schichtung von metallischen Platten und dazwischen eingebrachtem elastischen Material, beispielsweise Gummi oder einem künstlichen Elastomer. In dieser bevorzugten Ausführungsform ist es durch geeignete Wahl der Abmessungen der Flachelastomerschichten und Anzahl der Zwischenplatten möglich, die Federsteifigkeiten in weiten Grenzen so einzustellen, wie es für die anliegenden Massen- u. Belastungsverhältnisse günstig ist.

In der linken Seite von Fig. 9 ist außerdem ein Demontagehaltekörper 43' in montierter Position erkennbar, wobei ein Verbindungskörper 45 des Demontagehaltekörpers 43 in einer entsprechenden Aufnahmeöffnung 39 im unteren Rahmenteil 72 eingebracht ist, während die Schrauben 44 den oberen Teil des Demontagehaltekörpers 43' mit dem Stützkörper 80 verbinden. Diese Anordnung hat den Vorteil einer leichten Zugänglichkeit und einfachen Wartbarkeit, da das Auflager an einer Seite angeordnet sein kann, die gut zugänglich ist.

Eine alternative Ausführung des Demontagekörpers sieht vor, dass der zentrale Stützkörper 80 der Fig. 9 so weit nach links verlängert wird, dass eine ausreichend große Bohrung von oben nach unten neben dem Rahmen 70 Platz findet. Durch die Bohrung wird dann ein Demontagehaltekörper, z.B. in Form einer großen Schraube oder eines Stehbolzens, geschraubt und mit dem Gesamtrahmen oder einem mit dem unteren Rahmenteil 72 verbundenen Bauteil verbunden.

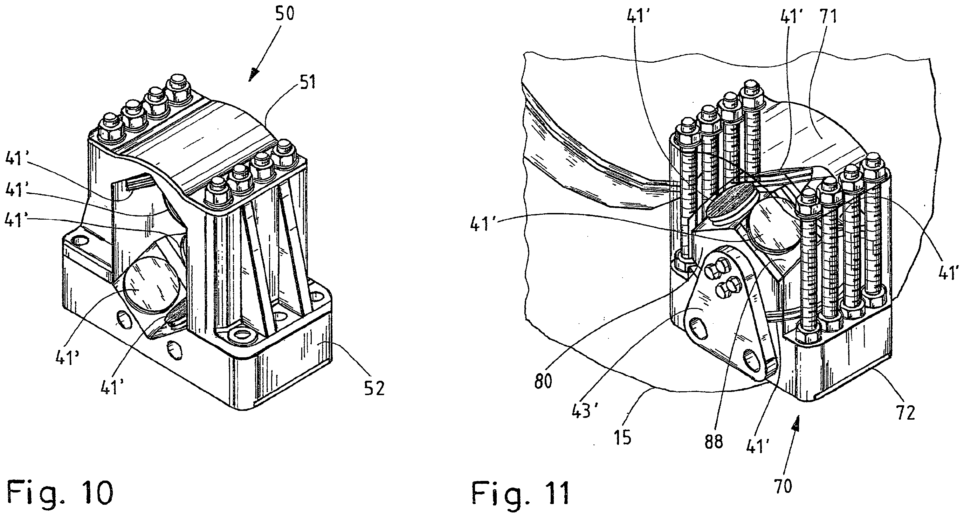

In den Figuren 10 und 11 sind zwei erfindungsgemäße Ausführungsbeispiele dargestellt, die sich an den Ausführungsbeispielen der Figuren 5 bis 9 orientieren. So ist die Konfiguration des zentralen Stützkörpers und des Rahmens in Fig. 10 entsprechend derjenigen des erfindungsgemäßen Rahmens 50 aus Fig. 5 und 6. Die Konfiguration in Fig. 11 entspricht derjenigen in den Figuren 7, 8 und 9. Im Unterschied zu den vorgenannten Figuren sind jedoch die elastischen Flachelastomerkörper 41' nicht rechteckig, sondern rund ausgebildet. Dies führt zu geringeren lokalen Belastungen der Flachelastomerkörper 41 und somit 41' und somit zu einer erhöhten Lebensdauer und geringeren Wartungsintensität.

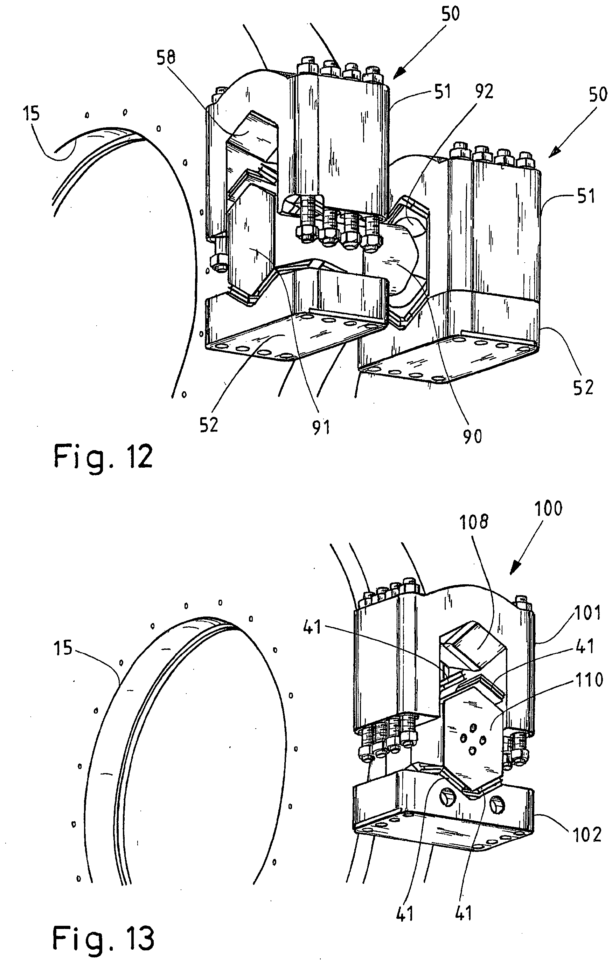

In Fig. 12 ist ein weiteres Ausführungsbeispiel eines Auflagers gezeigt, wobei eine doppelte fliegende Lagerung mit einem zentralen Doppelstützkörper 90 mit Bolzenköpfen 91, 92 Verwendung findet. Jeder einzelne Stützkörper 91, 92 des Doppelstützkörpers 90 ist wiederum mit einer "O"-förmigen Normalenvektorenkonfiguration gemäß dem Ausführungsbeispiel der Figuren 5, 6 und 10 ausgebildet. Die Rahmen 50 entsprechen auch denjenigen der Figuren 5, 6 und 10. Sie können allerdings wegen der doppelten Ausführung gegebenenfalls mit geringeren Belastungsspezifikationen ausgelegt sein. Bezüglich der Wartung der darin eingespannten Flachelastomerkörper 41 ist die Akkomodation eines Demontagehalterkörpers 43, 43' nicht notwendig, da das Getriebe jeweils von dem Rahmen gehalten wird, der gerade nicht gewartet wird.

In Fig. 13 ist ein weiteres Ausführungsbeispiel eines erfindungsgemäßen fliegend gelagerten Auflagers gezeigt, wobei jedoch der zentrale Stützkörper 110 quer zur Rotorwellenachse angeordnet ist. In Bezug auf die Rotorschubkräfte in Richtung der Rotorwellenachse sind die Flachelastomerkörper 41 bezüglich ihrer Normalenvektoren in einer "X"-Konfiguration angeordnet. Bezüglich radialer Komponenten in Bezug auf das Getriebe 15 herrscht eine "O"-Konfiguration. Die Flachelastomerkörper 41 sind an der Oberseite und der Unterseite im Wesentlichen sattelförmig angeordnet. Die Rahmenteile 101, 102 des Rahmens 100 sowie die Auflagefläche 108 sind an diese Konfiguration angepasst. Diese bevorzugte Ausführungsform stellt eine besonders kompakte und materialsparende Anordnung dar.

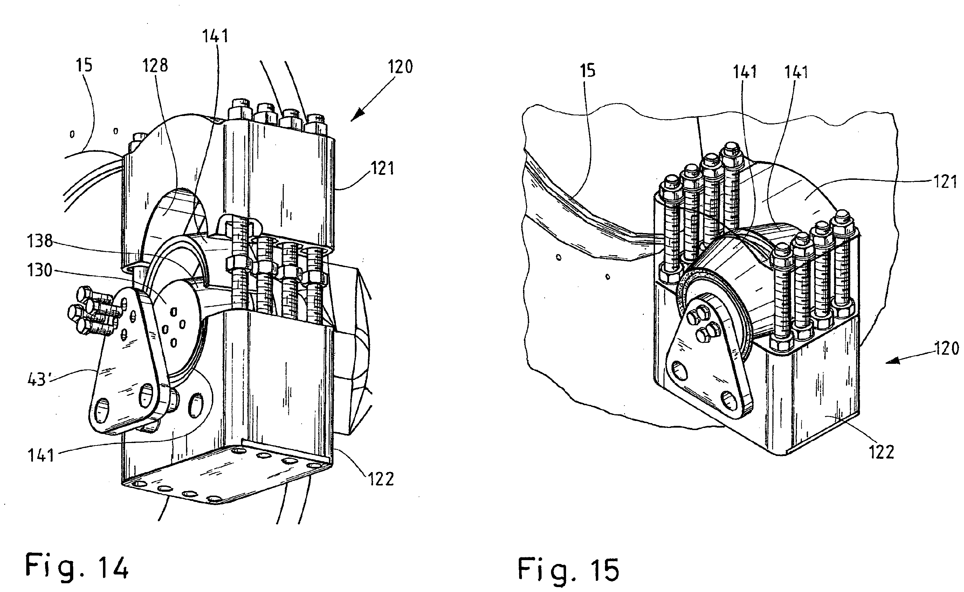

In den Figuren 14 und 15 sind schematische Darstellungen nicht erfinderischer Auflager gezeigt. Das in Fig. 14 und Fig. 15 gezeigte Auflager umfasst einen zentralen Stützkörper 130 sowie ein Lager 120 mit Lagerteilen 121, 122, zwischen denen zwei konusförmige Elastomerkörper 141 eingespannt sind, wobei die gemeinsame zentrale Symmetrieachse der Konusse wiederum parallel zur Rotorwellenachse ist. Die konusförmigen Elastomerkörper 141 sind derart zueinander ausgerichtet, dass sich bezüglich ihrer Flächennormalenvektoren im Querschnitt und in Verlängerung zur gemeinsamen zentralen Achse eine "X"-Konfiguration ergibt, vergleichbar mit der in Fig. 9 dargestellten Situation. Auch hierbei handelt es sich jeweils um eine fliegende Lagerung, an deren Kopfende ein Demontagehaltekörper 43' anwendbar ist.

Die konusförmigen Elastomerkörper 141 sind nicht die in der vorliegenden Anmeldung erfindungsgemäß vorgesehenen Flachelastomerkörper 41, 41', die im Wesentlichen ohne Krümmung in einer Ebene ausgebildet sind. Die in Fig. 14 und Fig. 15 dargestellten Versionen erlauben durch die oben genannte "X"-Konfiguration einen einfachen Zugang und Austausch und sind daher wartungsfreundlich. Ebenfalls bieten sie die Möglichkeit der fliegenden Lagerung.

### Bezugszeichenliste

- 1: Windenergieanlage
- 2: Turm
- 3: Gondel
- 4: Rotornabe
- 5: Rotorblatt
- 6: Rotorblattlager
- 7: Blattverstellantrieb
- 8: Steuerung der Blattverstellung
- 9: Turmkopfdrehkranz
- 10: Windnachführungsmotoren
- 11: Azimutbremsen
- 12: Maschinenträger
- 13: Rotorwelle
- 14: Rotorlager
- 15: Getriebe
- 16: elastische Getriebeaufhängung
- 17: Rotorbremse
- 18: Schleifringüberträger
- 19: Generatorwelle mit Kupplungen
- 20: Generator
- 21: Wärmetauscher
- 30 - 30": Rahmen
- 31 - 31": oberes Rahmenteil
- 32 - 32": unteres Rahmenteil
- 33: Stehbolzen
- 34, 35: Schraubmuttern
- 36, 37: durchgehende Öffnungen
- 38: Auflagefläche
- 39: Verbindungsöffnung
- 40 - 40": zentraler Stützkörper
- 41: Flachelastomerkörper
- 41': runde Flachelastomerkörper
- 42: Verbindungsöffnungen
- 43, 43': Demontagehaltekörper
- 44: Schrauben
- 45: Verbindungskörper
- 47 - 47": Frontfläche
- 48 - 48": Auflagefläche
- 49 - 49": Lagerarm
- 50: Rahmen
- 51: oberes Rahmenteil
- 52: unteres Rahmenteil
- 58: Auflagefläche
- 60: zentraler Stützkörper
- 67: Frontfläche
- 68: Auflagefläche
- 69: Lagerarm
- 70: Rahmen
- 71: oberes Rahmenteil
- 72: unteres Rahmenteil
- 78: Auflagefläche
- 80: zentraler Stützkörper
- 87: Frontfläche
- 88: Auflagefläche
- 89: Lagerarm
- 90: Doppelstützkörper
- 91, 92: Stützkörper
- 100: Rahmen
- 101: oberes Rahmenteil
- 102: unteres Rahmenteil
- 108: Auflagefläche
- 110: zentraler Stützkörper
- 120: Rahmen
- 121: oberes Rahmenteil
- 122: unteres Rahmenteil
- 128: Auflagefläche
- 130: zentraler Stützkörper
- 138: Auflagefläche
- 141: konusförmige Flachelastomerkörper
- S: Symmetrieachse
- N1 - N4: Normalenvektoren

## Patentansprüche

1. Windenergieanlage (1) mit einem Rotor (4, 5), einer im Wesentlichen horizontal ausgerichteten Rotorwelle (13), einem Getriebe (15) und einem Maschinenträger (12) sowie einer Getriebelagerung, umfassend wenigstens ein zwischen einer Rotornabe (4) und dem Getriebe (15) angeordnetes Wälzlager (14) und wenigstens zwei Auflager (16) am Getriebe (15), wobei die Auflager (16) jeweils wenigstens einen zentralen Stützkörper (40 - 40", 60, 80, 90 - 92, 110), wenigstens einen Rahmen (30 - 30", 50, 70, 100) und mehrere zwischen dem Rahmen (30 - 30", 50, 70, 100) und dem zentralen Stützkörper (40 - 40", 60, 80, 90 - 92, 110) eingespannte Flachelastomerkörper (41, 41') aufweisen, wobei der zentrale Stützkörper (40 - 40", 60, 80, 90 - 92, 110) nur einseitig gelagert ist, **dadurch gekennzeichnet, dass** wenigstens zwei der Auflager (16) als Festlager zur Aufnahme von wenigstens 50 %, insbesondere wenigstens 80 %, insbesondere wenigstens 95 %, der im Betrieb der Windenergieanlage (1) auftretenden in axialer Richtung der Rotorwelle (13) wirkenden Rotorschubkräfte ausgebildet sind, wobei in einem als Festlager ausgebildeten Auflager (16) jeweils wenigstens zwei Flachelastomerkörper (41, 41') an unterschiedlichen Seiten des zentralen Stützkörpers (40 - 40", 60, 80, 90 - 92, 110) in unterschiedlichen Richtungen schräg zur Rotorwellenachse so ausgerichtet und zueinander angeordnet sind, dass der zentrale Stützkörper (40 - 40", 60, 80, 90 - 92, 110) in Richtung einer zur Rotorwellenachse parallelen Rotorschubbelastung zwischen den Flachelastomerkörpern (41, 41') eingekeilt ist, wobei der zentrale Stützkörper (40 - 40", 60, 80, 90 - 92, 110) zur Einstellung der Verkeilung einen in Richtung der Rotorwelle (13) variablen Querschnitt aufweist, insbesondere eine variable Höhe, wobei der zentrale Stützkörper (40 - 40", 60, 80, 90 - 92, 110) parallel oder senkrecht zur Rotorwellenachse angeordnet ist, bei einer senkrechten Anordnung zur Rotorwellenachse im Wesentlichen horizontal.

2. Windenergieanlage (1) nach Anspruch 1, **dadurch gekennzeichnet, dass** der zentrale Stützkörper (40 - 40", 60, 80, 90 - 92, 110) mit dem Getriebe (15) verbunden ist und der Rahmen (30 - 30", 50, 70, 100) mit dem Maschinenträger (12), oder der zentrale Stützkörper (40 - 40", 60, 80, 90 - 92, 110) mit dem Maschinenträger (12) verbunden ist und der Rahmen (30 - 30", 50, 70, 100) mit dem Getriebe (15).

3. Windenergieanlage (1) nach Anspruch 1 oder 2, **dadurch gekennzeichnet, dass** ein oder mehrere Flachelastomerkörper (41, 41') als polygonale Flachelastomerkörper mit mehr als drei, insbesondere abgerundeten, Ecken, als elliptische Flachelastomerkörper oder als kreisförmige Flachelastomerkörper (41') ausgebildet sind.

4. Windenergieanlage (1) nach einem der Ansprüche 1 bis 3, **dadurch gekennzeichnet, dass** die Höhe des zentralen Stützkörpers (40 - 40", 60, 80, 90 - 92, 110) größer ist als die Breite des Stützkörpers (40 - 40", 60, 80, 90 - 92, 110).

5. Windenergieanlage (1) nach einem der Ansprüche 1 bis 4, **dadurch gekennzeichnet, dass** die Flachelastomerkörper (41, 41'), insbesondere in Abhängigkeit der im Betrieb der Windenergieanlage (1) auf sie einwirkenden Lasten, insbesondere Rotorschub, Drehmoment, Giermoment und/oder Nickmoment, unter Winkeln von mehr als 45° oder von weniger als 45° zu einer Horizontalen oder einer Vertikalen angeordnet sind.

6. Windenergieanlage (1) nach einem der Ansprüche 1 bis 5, **dadurch gekennzeichnet, dass** der Rahmen (30 - 30", 50, 70, 100) ein oberes Rahmenteil (31 - 31", 51, 71, 101) und ein unteres Rahmenteil (32 - 32", 52, 72, 102) aufweist, die mittels Stehbolzen (33) miteinander verbindbar oder verbunden sind, wobei die Stehbolzen (33) durch durchgehende Öffnungen (36) im oberen Rahmenteil (31 - 31", 51, 71, 101) steckbar oder gesteckt sind und mit dem unteren Rahmenteil (32 - 32", 52, 72, 102) oder dem Maschinenträger (12) oder dem Getriebe (15) verbindbar sind, wobei die Stehbolzen (33) oberhalb des oberen Rahmenteils (31 - 31", 51, 71, 101) mit Schraubmuttern (34, 35) versehen sind, wobei das untere Rahmenteil (32 - 32", 52, 72, 102) fest mit dem Maschinenträger (12) verbindbar oder verbunden ist.

7. Windenergieanlage (1) nach Anspruch 6, **dadurch gekennzeichnet, dass** ein Demontagehaltekörper (43, 43') umfasst ist, der einerseits mit einem mit dem Getriebe (15) verbundenen Teil eines Auflagers (16) und andererseits mit einem dem Maschinenträger (12) verbundenen Teil des Auflagers (16) oder dem Maschinenträger (12) selbst verbindbar ist.

8. Verfahren zum Warten einer Getriebelagerung einer Windenergieanlage (1) nach Anspruch 7, **dadurch gekennzeichnet, dass** zum Warten von zwischen dem zentralen Stützkörper (40 - 40", 60, 80, 90 - 92, 110) und dem oberen Rahmenteil (31 - 31", 51, 71, 101) angeordneten Flachelastomerkörpern (41, 41') in einem Schritt a)
- zunächst der Demontagehaltekörper (43, 43') einerseits mit einem mit dem Getriebe (15) verbundenen Teil eines Auflagers (16) und andererseits mit einem mit dem Maschinenträger (12) verbundenen Teil des Auflagers (16) oder dem Maschinenträger (12) verbunden wird,
- anschließend die Schraubmuttern (34) auf den Stehbolzen (33) oberhalb des oberen Rahmenteils (31 - 31", 51, 71, 101) gelockert werden.

9. Verfahren nach Anspruch 8, **dadurch gekennzeichnet, dass** zum Warten von zwischen dem zentralen Stützkörper (40 - 40", 60, 80, 90 - 92, 110) und dem unteren Rahmenteil (32 - 32", 52, 72, 102) angeordneten Flachelastomerkörpern (41, 41') in einem Schritt b)
- zunächst die Schraubmuttern (34) auf den Stehbolzen (33) oberhalb des oberen Rahmenteils (31 - 31", 51, 71, 101) gelockert werden und
- anschließend das Getriebe (15) mit dem zentralen Stützkörper (40 - 40", 60, 80, 90 - 92, 110) durch das Rotorgewicht oder durch ein Hilfsmittel angehoben wird.

10. Verfahren nach Anspruch 9, **dadurch gekennzeichnet, dass**,
- wenn die Schritte a) und b) hintereinander ausgeführt werden, nach Ausführung der Teilschritte des Schrittes a) und vor Ausführung der Teilschritte des Schrittes b) der Rahmen (30 - 30", 50, 70, 100) wieder verspannt wird und der Demontagehaltekörper (43, 43') entfernt wird,
oder,
- wenn die Schritte b) und a) hintereinander ausgeführt werden, nach Ausführung der Teilschritte des Schrittes b) und vor Ausführung der Teilschritte des Schrittes a) der Rahmen (30 - 30", 50, 70, 100) wieder verspannt wird.

## Claims

1. A wind energy installation (1) with a rotor (4, 5), a substantially horizontally oriented rotor shaft (13), a gear box (15) and a main frame (12), as well as a gear box supporting device comprising at least one rolling bearing (14) arranged between a rotor hub (4) and the gear box (15), and at least two supports (16) at the gear box (15), wherein the supports (16) each comprise at least one central supporting body (40 - 40", 60, 80, 90 - 92, 110), at least one frame (30 - 30", 50, 70, 100) and several flat elastomer bodies (41, 41') that are clamped between the frame (30 - 30", 50, 70, 100) and the central supporting body (40 - 40", 60, 80, 90 - 92, 110), wherein the central supporting body (40 - 40", 60, 80, 90 - 92, 110) is only supported on one side,
**characterized in that** at least two of the supports (16) are fixed bearings for absorbing at least 50 %, in particular at least 80 %, in particular at least 95 %, of the rotor thrust forces acting in an axial direction of the rotor shaft (13) during operation of the wind energy installation (1), wherein, in one of the supports (16) formed as a fixed bearing, at least two flat elastomer bodies (41, 41') are, on different sides of the central supporting body (40 - 40", 60, 80, 90 - 92, 110), oriented in different directions obliquely with respect to the rotor shaft axis and arranged with respect to each other in such a way that the central supporting body (40 - 40", 60, 80, 90 - 92, 110) is wedged between the flat elastomer bodies (41, 41') in a direction of a rotor thrust load parallel to the rotor shaft axis, wherein the central supporting body (40 - 40", 60, 80, 90 - 92, 110) has a variable cross section, in particular a variable height, in the direction of the rotor shaft (13) for adjusting the wedging, wherein the central supporting body (40 - 40", 60, 80, 90 - 92, 110) is arranged parallel or perpendicular with respect to the rotor shaft axis, wherein, when the supporting body is arranged perpendicular to the rotor shaft axis, the central supporting body is substantially horizontal.

2. The wind energy installation (1) according to claim 1, **characterized in that** the central supporting body (40 - 40", 60, 80, 90 - 92, 110) is connected with the gear box (15) and the frame (30 - 30", 50, 70, 100) with the main frame (12), or the central supporting body (40 - 40", 60, 80, 90 - 92, 110) is connected with the main frame (12) and the frame (30 - 30", 50, 70, 100) with the gear box (15).

3. The wind energy installation (1) according to claim 1 or 2, **characterized in that** one or more flat elastomer bodies (41, 41') are designed as polygonal flat elastomer bodies with more than three corners, in particular rounded corners, as elliptical flat elastomer bodies or as circular flat elastomer bodies (41').

4. The wind energy installation (1) according to any one of the claims 1 to 3, **characterized in that** the height of the central supporting body (40 - 40", 60, 80, 90 - 92, 110) is greater than the width of the supporting body (40 - 40", 60, 80, 90 - 92, 110).

5. The wind energy installation (1) according to any one of the claims 1 to 4, **characterized in that** the flat elastomer bodies (41, 41') are arranged at angles of more than 45° or of less than 45° to a horizontal or a vertical line, in particular in dependence upon the loads acting on them during the operation of the wind energy installation (1), in particular rotor thrust, torque, yaw moment and/or pitching moment.

6. The wind energy installation (1) according to any one of the claims 1 to 5, **characterized in that** the frame (30 - 30", 50, 70, 100) comprises an upper frame part (31 - 31", 51, 71, 101) and a lower frame part (32 - 32", 52, 72, 102), which are or can be connected with each other by means of studs (33), wherein the studs (33) can be inserted or are inserted through through-holes (36) in the upper frame part (31 - 31", 51, 71, 101) and can be connected to the lower frame part (32 - 32", 52, 72, 102) or the main frame (12) or the gear box (15), wherein the studs (33) are provided with screw nuts (34, 35) above the upper frame part (31 - 31", 51, 71, 101), wherein the lower frame part (32 - 32", 52, 72, 102) can be permanently connected or is permanently connected with the main frame (12).

7. The wind energy installation (1) according to claim 6, **characterized in that** a disassembly holding body (43, 43') is provided, which on the one hand can be connected to a part of a support (16) connected with the gear box (15) and on the other hand to a part of the support (16) connected with the main frame (12) or with the main frame (12) itself.

8. A method of carrying out maintenance on a gear box supporting device of a wind energy installation (1) according to claim 7, **characterized in that**, in order to carry out maintenance on flat elastomer bodies (41, 41') arranged between the central supporting body (40 - 40", 60, 80, 90 - 92, 110) and the upper frame part (31 - 31", 51, 71, 101), in a step a)
- first, the disassembly holding body (43, 43') is connected on the one hand with a part of a support (16) connected with the gear box (15) and on the other hand with a part of the support (16) connected with the main frame (12), or with the main frame (12) itself,
- subsequently, the screw nuts (34) on the studs (33) above the upper frame part (31 - 31", 51, 71, 101) are loosened.

9. The method according to claim 8, **characterized in that**, in order to carry out maintenance on flat elastomer bodies (41, 41') arranged between the central supporting body (40 - 40", 60, 80, 90 - 92, 110) and the lower frame part (32 - 32", 52, 72, 102), in a step b)
- first, the screw nuts (34) on the studs (33) above the upper frame part (31 - 31", 51, 71, 101) are loosened and
- subsequently, the gear box (15) with the central supporting body (40 - 40", 60, 80, 90 - 92, 110) is raised by the rotor weight or by an auxiliary means.

10. The method according to claim 9, **characterized in that**
- if the steps a) and b) are performed in this order, after execution of the sub-steps of the step a) and before execution of the sub-steps of the step b), the frame (30 - 30", 50, 70, 100) is tensioned again and the disassembly holding body (43, 43') is removed,
or
- if the steps b) and a) are performed in this order, after execution of the sub-steps of the step b) and before execution of the sub-steps of the step a), the frame (30 - 30", 50, 70, 100) is tensioned again.

## Revendications

1. Éolienne (1) avec un rotor (4, 5), un arbre de rotor (13) orienté sensiblement de manière horizontale, une transmission (15) et un porte-machine (12) ainsi qu'un support de transmission, comprenant au moins un palier de roulement (14) disposé entre un moyeu de rotor (4) et la transmission (15) et au moins deux systèmes de soutien (16) au niveau de la transmission (15), dans laquelle les systèmes de soutien (16) présentent respectivement au moins un corps d'appui (40 - 40", 60, 80, 90 - 92, 110) central, au moins un cadre (30 - 30", 50, 70, 100) et plusieurs corps élastomères plats (41, 41') enserrés entre le cadre (30 - 30", 50, 70, 100) et le corps d'appui central (40 - 40", 60, 80, 90 - 92, 110), dans laquelle le corps d'appui (40 - 40", 60, 80, 90 - 92, 110) central est monté seulement d'un côté,
**caractérisée en ce qu'**au moins deux des systèmes de soutien (16) sont réalisés sous la forme de paliers fixes servant à recevoir au moins 50 %, en particulier au moins 80 %, en particulier au moins 95 %, des forces de cisaillement de rotor apparaissant lors du fonctionnement de l'éolienne (1) agissant dans une direction axiale de l'arbre de rotor (13), dans laquelle respectivement au moins deux corps élastomères plats (41, 41') sont orientés et disposés les uns par rapport aux autres au niveau de côtés différents du corps d'appui (40 - 40", 60, 80, 90 - 92, 110) dans des directions différentes de manière oblique par rapport à l'axe d'arbre de rotor dans un système de soutien (16) réalisé sous la forme d'un palier fixe de telle sorte que le corps d'appui (40 - 40", 60, 80, 90 - 92, 110) central est coincé entre les corps élastomères plats (41, 41') en direction d'une contrainte de cisaillement de rotor parallèle à l'axe d'arbre de rotor, dans laquelle le corps d'appui (40 - 40", 60, 80, 90 - 92, 110) central présente, pour régler le calage, une section transversale variable en direction de l'arbre de rotor (13), en particulier une hauteur variable, dans laquelle le corps d'appui (40 - 40", 60, 80, 90 - 92, 110) central est disposé de manière parallèle ou perpendiculaire par rapport à l'axe d'arbre de rotor, dans le cas d'un agencement perpendiculaire par rapport à l'axe d'arbre de rotor sensiblement horizontalement.

2. Éolienne (1) selon la revendication 1, **caractérisée en ce que** le corps d'appui (40 - 40", 60, 80, 90 - 92, 110) central est relié à la transmission (15), et le cadre (30 - 30", 50, 70, 100) est relié au porte-machine (12) ou le corps d'appui (40 - 40", 60, 80, 90 - 92, 110) central est relié au porte-machine (12) et le cadre (30 - 30", 50, 70, 100) est relié à la transmission (15).

3. Éolienne (1) selon la revendication 1 ou 2, **caractérisée en ce qu'**un ou plusieurs corps élastomères plats (41, 41') sont réalisés sous la forme de corps élastomères plats polygonaux avec plus de trois angles, en particulier arrondis, sous la forme de corps élastomères plats elliptiques ou sous la forme de corps élastomères plats circulaires (41').

4. Éolienne (1) selon l'une quelconque des revendications 1 à 3, **caractérisée en ce que** la hauteur du corps d'appui (40 - 40", 60, 80, 90 - 92, 110) central est plus grande que la largeur du corps d'appui (40 - 40", 60, 80, 90 - 92, 110) central.

5. Éolienne (1) selon l'une quelconque des revendications 1 à 4, **caractérisée en ce que** les corps élastomères plats (41, 41') sont disposés, en particulier en fonction des charges agissant sur eux lors du fonctionnement de l'éolienne (1), en particulier du cisaillement de rotor, du couple de rotation, du couple de lacet et/ou du couple de tangage, selon des angles supérieurs à 45° ou inférieurs à 45° par rapport à une horizontale ou une verticale.

6. Éolienne (1) selon l'une quelconque des revendications 1 à 5, **caractérisée en ce que** le cadre (30 - 30", 50, 70, 100) présente une partie de cadre supérieure (31 - 31", 51, 71, 101) et une partie de cadre inférieure (32 - 32", 52, 72, 102), qui peuvent être reliées ou sont reliées entre elles au moyen de tirants (33), dans laquelle les tirants (33) peuvent être enfichés ou sont enfichés à travers des ouvertures (36) traversantes dans la partie de cadre supérieure (31 - 31", 51, 71, 101) et peuvent être reliés à la partie de cadre inférieure (32 - 32", 52, 72, 102) ou au porte-machine (12) ou à la transmission (15), dans laquelle les tirants (33) sont pourvus, au-dessus de la partie de cadre supérieure (31 - 31", 51, 71, 101), d'écrous à visser (34, 35), dans laquelle la partie de cadre inférieure (32 - 32", 52, 72, 102) peut être reliée ou est reliée de manière solidaire au porte-machine (12).

7. Éolienne (1) selon la revendication 6, **caractérisée en ce qu'**un corps de maintien de démontage (43, 43') est compris, qui peut être relié d'une part à une partie, reliée à la transmission (15), d'un système de soutien (16) et d'autre part à une partie, reliée au porte-machine (12), du système de soutien (16) ou au porte-machine (12) lui-même.

8. Procédé servant à entretenir un support de transmission d'une éolienne (1) selon la revendication 7, **caractérisé en ce qu'**aux fins de l'entretien de corps élastomères plats (41, 41') disposés entre le corps d'appui (40 - 40", 60, 80, 90 - 92, 110) central et la partie de cadre supérieure (31 - 31", 51, 71, 101), lors d'une étape a),
- dans un premier temps, le corps de maintien de démontage (43, 43') est relié d'une part à une partie, reliée à la transmission (15), d'un système de soutien (16) et d'autre part à une partie, reliée au porte-machine (12), du système de soutien (16) ou au porte-machine (12),
- puis les écrous à visser (34) sont desserrés sur les tirants (33) au-dessus de la partie de cadre supérieure (31 - 31", 51, 71, 101).

9. Procédé selon la revendication 8, **caractérisé en ce qu'**aux fins de l'entretien de corps élastomères plats (41, 41') disposés entre le corps d'appui (40 - 40", 60, 80, 90 - 92, 110) et la partie inférieure de cadre (32 - 32", 52, 72, 102), lors d'une étape b)
- dans un premier temps, les écrous à visser (34) sur les tirants sont desserrés au-dessus de la partie de cadre supérieure (31 - 31", 51, 71, 101),
- puis la transmission (15) avec le corps d'appui (40 - 40", 60, 80, 90 - 92, 110) central est relevée par le poids de rotor ou par un moyen auxiliaire.

10. Procédé selon la revendication 9, **caractérisé en ce que**
- quand les étapes a) et b) sont exécutées l'une après l'autre, après exécution des étapes partielles de l'étape a) et avant exécution des étapes partielles de l'étape b), le cadre (30 - 30", 50, 70, 100) est à nouveau assemblé par serrage et le corps de maintien de démontage (43, 43') est retiré,
ou
- quand les étapes b) et a) sont exécutées l'une après l'autre, après exécution des étapes partielles de l'étape b) et avant exécution des étapes partielles de l'étape a), le cadre (30 - 30", 50, 70, 100) est à nouveau assemblé par serrage.
